# EUROPEAN PATENT SPECIFICATION

(11) **EP 2 159 292 B1**
(45) Date of publication and mention of the grant of the patent: **30.05.2018**
(21) Application number: 08777244.8
(22) Date of filing: 16.06.2008
(51) Int. Cl.: C21D 9/00, B21D 22/20, C21D 1/18, C21D 9/46, C22C 18/00, C22C 38/00, C22C 38/58, C23C 2/06, C23C 2/26, B21D 22/26, C22C 38/02, C22C 38/04, C22C 38/06, C22C 38/22, C22C 38/28, C22C 38/32, C22C 38/38, C21D 1/673, B21D 22/02, C23C 2/28, B32B 15/01

(54) **PROCESS FOR MANUFACTURING SHAPED ARTICLE**
VERFAHREN ZUR HERSTELLUNG EINES FORMKÖRPERS
PROCÉDÉ SERVANT À FABRIQUER UN ARTICLE PROFILÉ

(30) Priority: 15.06.2007 JP 2007158445
(43) Date of publication of application: 03.03.2010
(73) Proprietor: Nippon Steel & Sumitomo Metal Corporation, Tokyo 100-8071 (JP)
(72) Inventor: NAKAMURA, Toyomitsu, Osaka-shi Osaka 541-0041 (JP); NAKATA, Masahiro, Osaka-shi Osaka 541-0041 (JP); TAKEBAYASHI, Hiroshi, Osaka-shi Osaka 541-0041 (JP); TOKI, Tamotsu, Osaka-shi Osaka 541-0041 (JP); KOJIMA, Nobusato, Osaka-shi Osaka 541-0041 (JP)
(74) Representative: J A Kemp
(86) International application number: PCT/JP2008/061006
(87) International publication number: WO 2008/153183

(56) References cited:
- JP-A- 2003 073 774
- JP-A- 2003 126 921
- JP-A- 2003 129 258
- JP-A- 2003 147 499
- JP-A- 2005 256 108
- JP-A- 2006 037 141
- JP-A- 2006 073 774
- JP-A- 2007 016 296
- JP-A- 2007 160 388
- US-A1- 2003 066 582
- US-A1- 2005 257 862

## Description

### Technical Field

The present invention relates to a method for manufacturing formed articles such as automotive side sill, B pillar, and A pillar.

### Background Art

In recent years, for compatibility of automotive weight saving and safety, efforts have been made to highly-strengthen a steel sheet and to reduce thickness of the steel sheet to be used. As a technique to form a low-elongation material such as high-tension steel sheet, adopted is a hot-forming method having the steps of: preheating a forming material; forming the material; and quenching the formed article using a relatively low-temperature forming die at the same time as forming.

As a material for formed article, for the purpose of inhibiting generation of iron oxide scales on the surface of steel base material and, as required, of improving corrosion resistance of the formed article, usage of a steel sheet coated with galvanizing or aluminum-based coating is proposed. For example, Patent documents 1, 2, and 3 disclose usage of a galvanized steel sheet for hot-forming. According to these documents, when using a galvanized steel sheet as the forming material, coating layer's sacrificial anticorrosive performance to the steel sheet is expected. In addition, when using the galvannealed steel sheets disclosed in Patent documents 2 and 3 as the material, compared with a pure-zinc-based galvanized steel sheet, coating layers of these steel sheets are hard to be evaporated. Moreover, in such a circumstance, zinc in the coating layer and iron in the base steel tend to mutually diffuse so that relatively deformable iron-zinc solid solution phase is easily formed on the surface of the steel material by heating for hot-forming. Therefore, there is an advantage to inhibit crack occurrence on the surface of the formed article.

On the other hand, depending on the shape of formed articles, deep-drawing and stretch forming become necessary. However, in these forming types, forming limit is low; thereby predetermined shapes often cannot be obtained. In such a case, prior to the hot-forming, cold preforming is sometimes carried out to form an intermediate shape. For instance, Patent documents 4 and 5 disclose cases where hot press forming is carried out after preforming of a steel sheet. Further, Patent document 6 discloses a case where thermal treatment is carried out after obtaining a beam formed article from the steel sheet.

Patent Document 1: Japanese Patent Application Laid-Open (JP-A) No. 2001-353548
Patent Document 2: JP-A No. 2003-073774
Patent Document 3: JP-A No. 2005-074464
Patent Document 4: Published Japanese translations of PCT application No. 2006-529002
Patent Document 5: Published Japanese translations of PCT application No. 2007-500782
Patent Document 6: Published Japanese translations of PCT application No. 2004-533328

US 2003/0066582 discloses a method of making a hardened sheet material article, at least one pot-shaped depression is formed in a sheet metal blank. Thereafter, the sheet metal blank is hot formed in a press mold to a sheet metal article, and the sheet metal article is hardened. The press mold provides hereby a calibration of the depression to provide the final shape.

### Disclosure of the Invention

### Problems to be solved by the Invention

However, if the cold preforming of the conventional techniques is applied to a coated material, coating layer of the steel tends to be damaged at preforming, which is problematic. Particularly, when carrying out preforming such as press forming using galvannealed steel sheet as a material of the formed article, debonding of the coating layer, that is called "powdering", occurs at preforming. In these debonded portions or damaged portions of the coating, iron oxide scales generate with the following heating; it becomes clear that the purpose to use the coated steel sheet cannot be attained. As it were, by the partial iron oxide scale generation, problems such as debonding of scales at hot-forming, deterioration of surface appearance of the formed articles, or deterioration of paint adhesiveness of the formed articles have been caused.

Accordingly, an object of the present invention is to provide a method for manufacturing formed article, which can inhibit damage and debonding of the coating layer at preforming and which can improve surface quality of the formed article, when manufacturing a formed article by preforming a galvannealed steel sheet and then quenching the preform. Means for Solving the Problems

The first aspect of the present invention solves the problems by providing a method for manufacturing formed article comprising: a first step comprising: feeding into a first die for press a galvannealed steel sheet, as a material, which has a coating layer containing: 8-25 mass % of Fe, and a remnant containing Zn, Al, and impurity; and then preforming the galvannealed steel sheet by pressing to obtain a preform; a second step of heating the preform at a temperature of 800-1100 degree C; and a third step of quenching the heated preform from said temperature to obtain a formed article, the material temperature just before preforming of the first step being a temperature below starting point of austenite transformation of the material and within the range of 100-700 degree C.

The second aspect of the invention is the method for manufacturing a formed article according to the first aspect of the invention, wherein in the third step, the heated preform is fed into a second die to carry out quenching.

The third aspect of the invention is the method for manufacturing a formed article according to the first aspect of the invention, wherein in the third step, the heated preform is fed into a second die to carry out finish forming for forming a shape different from that of the preform and quenching.

The fourth aspect of the invention is the method for manufacturing a formed article according to any one of the first to third aspects of the invention, wherein in the second step, the surface of the preform is applied with a rust preventive oil and then heated.

The fifth aspect of the invention is the method for manufacturing a formed article according to any one of the first to fourth aspects of the invention, wherein in the first step, the material is heated using the first die or a heating means other than the first die such that the material temperature just before the preforming is a temperature below starting point of austenite transformation of the material and within the range of 100-700 degree C.

The sixth aspect of the invention is the method for manufacturing a formed article according to any one of the first to fifth aspects of the invention, wherein an iron-zinc solid solution phase is formed on the surface portion of the formed article after the third step.

The seventh aspect of the invention is the method for manufacturing a formed article according to any one of the first to sixth aspects of the invention, wherein the base component of the material contains: 0.08-0.45 mass % of C and a total of 0.5-3.0 mass % of Mn and/or Cr, and the base component further contains: 0.5 mass % or less of Si, 0.05 mass % or less of P, 0.05 mass % or less of S, 1 mass % or less of Al, 0.01 mass % or less of N, optionally one or more selected from: 0.01 mass % or less of B, 2 mass % or less of Ni, 1 mass % or less of Cu, 1 mass % or less of Mo, 1 mass % or less of V, 1 mass % or less of Ti, and 1 mass % or less of Nb and a remnant of the material contains Fe and impurity.

The eighth aspect of the invention is the method for manufacturing a formed article according to the seventh aspect of the invention, wherein the base component of the material contains, instead of a part of Fe, one or more selected from: 0.01 mass % or less of B, 2 mass % or less of Ni, 1 mass % or less of Cu, 1 mass % or less of Mo, 1 mass % or less of V, 1 mass % or less of Ti, and 1 mass % or less of Nb.

The 9th aspect of the invention is the method for manufacturing a formed article according to the eighth aspect of the invention, wherein the base component of the material contains 0.0001 mass % or more of B.

The 10th aspect of the invention is the method for manufacturing a formed article according to the second aspect of the invention, wherein the shape of the second die is the same as that of the first die. The 11th aspect of the invention is the method for manufacturing a formed article according to the first aspect of the invention, wherein the material temperature just before the preforming is 500 degree C or less.

The 12th aspect of the invention is the method for manufacturing a formed article according to the first aspect of the invention, wherein the material temperature just before the preforming is 150 degrees C or more.

The 13th aspect of the invention is the method for manufacturing a formed article according to the second aspect of the invention, wherein in the second step, the preform is heated in an atmosphere containing oxygen at a concentration of about 10 vol.% or less.

### Effects of the Invention

The present invention can improve surface quality of the product when manufacturing a formed article by quenching a galvannealed steel sheet. More specifically, it can solve a problem where a coating layer of the galvannealed steel sheet is damaged at preforming and then the steel sheet surface in the damaged area of the coating layer is oxidized by the following heating.

Such effects and advantages of the inventions will be made apparent from the following best mode for carrying out the invention.

### Best Mode for Carrying Out the Invention

Hereinafter, the best mode of the invention will be described. However, the invention is not limited by these best modes.

### 1. Galvannealed steel sheet

First of all, preferable range about compositions of a steel sheet and a coating layer of a galvannealed steel sheet will be described. It should be noted that "%" defining composition of the steel and coating means "mass %".

### 1-1. Steel composition

In the invention, chemical composition of a steel sheet as the base material is defined to desirably contain 0.08-0.45% C. Carbon (C) is an important element to enhance hardenability and to determine the strength of the formed article. However, if C content is below 0.08%, the effect is insufficient; if C content exceeds 0.45%, deterioration of toughness and weldability tends to occur. C content is more preferably 0.1-0.35%.

A total of Mn and/or Cr is desirably 0.5-3.0%. Mn and Cr are extremely effective elements to enhance hardenability of steel sheet and to stably secure strength of the formed article . If a total content of Mn and/or Cr is below 0.5%, the effects are insufficient; while, a total content of Mn and/or Cr exceeds 3.0%, the effects are saturated thereby it becomes difficult to stably secure the strength. More desirably, the total content of Mn and/or Cr is 0.8-2.0%.

The invention aims at obtaining only hardenability. To achieve the aim, defining the above content of C, Mn, and Cr is sufficient.

In the best mode of the invention, to enhance the strength and to stably attain the strength further more, additive elements are defined as follows: i.e. 0.5% or less of Si; 0.05% or less of P; 0.05% or less of S; 1% or less of Al; and 0.01% or less of N. These elements are also effective elements to enhance hardenability of the steel sheet and to stably secure strength of the formed article. However, even when the content exceeds the upper limit, these elements do not give effects in proportion to the content, which results in unnecessary increase of cost. Therefore, content of each element of the alloyed metal should be within the above range. It should be noted that Si, Al, P, S, and N may exist inevitably in the alloyed metal; Si and/or Al may be added as a deoxidizing agent.

Since elements of B, Ni, Cu, Mo, V, Ti, and Nb can enhance hardenability and toughness, one or more elements selected from: 0.01% or less of B, 2% or less of Ni, 1% or less or Cu, 1% or less of Mo, 1% or less of V, 1% or less of Ti, and 1% or less of Nb, are desirably contained.

Particularly, boron (B) is an important element to enhance hardenability of the steel sheet and to stably secure strength of the formed article. So, B content is further desirably 0.0001% or more and 0.01% or less. When B content is below 0.0001%, effect of addition of B is not sufficient; while, B content exceeds 0.01%, the effect becomes saturated, which results in a cost increase. More preferable B content is 0.0005% or more and 0.0040% or less.

### 1-2. Coating layer

The coating layer of the galvannealed steel sheet as the material of the invention contains: 8-25% of Fe; and remnant containing Zn, Al, and impurity.

When iron (Fe) content in the coating layer is too small, an eta (η)-Zn phase remains in the coating layer that results in evaporation and fluidization of zinc at heating in the second step. Therefore, Fe content is 8% or more. Under a condition where a temperature just before preforming is within the range of 41-700 degree C, even though Fe content is increased, there is little effect to the powdering. In view of manufacturing, Fe content is 25% or less, preferably 15% or less.

In addition, a coating layer of a galvannealed steel sheet, in general, contains about 0.1-0.5% Al; the coating layer of the present invention may also contain aluminum within the above range. In view of productivity of the galvannealed steel sheet itself, the content is preferably 0.4% or less. Moreover, by producing various kind of coating using the same coating equipments, elements such as Ni, Cr, Si, and Mg may contaminate the coating layer; however, these components may be contained within the range which does not show adverse influence.

Amount of coating is not particularly restricted. If it is too small, it becomes difficult to maintain a predetermined corrosion resistance of the formed article or difficult to form a zinc oxide layer necessary for inhibiting oxidation of a steel sheet when heating. So, the amount of coating is preferably about 30 g/m² or more per single-side. On the other hand, if amount of galvanizing is excessive, formation of iron-zinc solid solution phase tends to be insufficient and occurrence of powdering may not be inhibited. Hence, the amount of coating is about 100 g/m² or less, more preferably 75 g/m² or less.

### 2. Method for manufacturing a formed article

Next, the method for manufacturing formed material of the invention will be described as below. In the following description, quenching in the third step is carried out by using a die; however, the quenching is not limited to the method. For example, the quenching may be carried out by air cooling, oil cooling, and water cooling.

### 2-1. first step

By the method for manufacturing formed article of the invention, in the first step, a galvannealed steel sheet as a material is fed into a first die, and then the galvannealed steel sheet is preformed such that material temperature just before the preforming is within the range of 41-700 degree C, to obtain a preform. The specific detail is as follows.

### 2-1-1. Heating-up temperature

After cutting the galvannealed steel sheet into pieces having a predetermined size (shape), the cut steel sheet piece is heated such that material temperature just before the preforming is within the range of 100 -700 degree C. When the preforming is carried out within the temperature range, destruction (powdering) of the coating layer of the galvannealed steel sheet can be largely inhibited.

### 2-1-2. Heating method

Heating method is not specifically limited as long as the galvannealed steel sheet can be heated up to the above temperature range. For instance, there are die-exterior heating and die-interior heating. According to die-exterior heating, a blank as a material is heated outside the preforming die (first die) to raise the temperature. For example, heating by heating furnace and induction heating can be used. On the other hand, according to die-interior heating, the preforming die is heated at a predetermined temperature in advance using a heater incorporated therein; then, a blank at ordinary temperature is fed into the heated preforming dies and is contacted with the preforming dies to raise the temperature of blank. It should be noted that in both die-exterior heating and die-interior heating, it is not necessary to heat the entire surface of the blank homogeneously, a portion where powdering is significant should only be heated. Heating may be carried out in combination with the die-exterior heating and die-interior heating.

### 2-1-3. Method of preforming

When heating the material outside the die, a heated blank as the material is fed into the preforming die, and then preforming is carried out such that the temperature of blank just before preforming becomes at a temperature within the range of 100-700 degree C. When heating the material inside the die, a blank as the material is fed into the preforming die heated at a predetermined temperature, and then, preforming is carried out such that the temperature of blank just before preforming becomes at a temperature within the range of 100 -700 degree C. Temperature of blank just before preforming is 100 degree C or more, more preferably 200 degree C or more. The upper limit of the temperature of blank just before preforming is preferably 400 degree C. Due to this, powdering can be inhibited at preforming; thereby, scale generation can be inhibited in the second step. When the temperature is below 41 degree C, effect to inhibit powdering becomes less. On the other hand, when heating beyond 700 degree C, austenite transformation of the material starts, which tends to cause weakening of material strength and lowering the forming limit. Moreover, powdering inhibiting effect at the stage has already been saturated so that energy consumption by heating becomes remarkable. Examples of preforming method may be roll forming and press forming using dies. Further, at preforming, it is possible to apply lubricants onto the surface of the blank.

Temperature of the steel sheet can be measured using radiation thermometer. In case of die-interior heating, heating-up temperature of the die can be adopted as the temperature of the steel sheet.

Shape after preforming is not specifically limited. Usually, shape of preform may be almost the same shape as that of product after finish forming. For instance, by using a preforming die (first die) having almost the same shape as that of the second die (hot-forming die), a preform can be formed in a shape almost the same shape as that of the formed (finished) article. It should be noted that preforming can be carried out to form a shape which is different from the shape of formed article by using a first die having different shape from that of the second die.

Preforming is usually a one-step process; as required, it may be carried out by two or more steps. For example, a preforming process may be two or more-step process including trimming and piercing. In the circumstance, in at least the first step, the temperature of steel sheet just before preforming is set within the range of 100 -700 degree C. Desirably, in both steps of the preforming, the temperature of steel sheet just before preforming should be set within the range of 100 -700 degree C. When carrying out two or more-step preforming, since trimming and piercing does not cause powdering, these can be carried out without heating.

### 2-2. Second step

The second step is a process to heat the preform at a temperature of A₁ transformation point or more. More specifically, after being trimmed for removing unnecessary portion on an as-required basis, the trimmed preform is heated at a temperature of 800-1100 degree C. A rust preventive oil is preferably applied on the preform before heating. By applying a rust preventive oil onto the preform, scale generation at heating can be further inhibited. The rust preventive oil may be a conventional one which can be applied on steel sheets for inhibiting rust. Examples thereof include "NOX-RUST 550HN" manufactured by Parker Industries, Inc..

Examples of method for heating the preform include: heating using electric furnace, gas furnace, and so on; flame heating; ohmic heating; high-frequency heating; and induction heating. Atmosphere at heating is not particularly controlled; it may be an air atmosphere. However, in an air atmosphere, zinc oxide develops excessively; on the other hand, in case of an inert atmosphere, rapid oxidation reaction tends to occur when taking the preform out from the furnace to the air. Thus, atmosphere in the furnace is preferably an atmosphere containing oxygen at a concentration of about 10 vol.% or less. In the second step, the preform is heated up to a temperature where hardness (strength) of the post-quenching formed article becomes a targeted value; at the same time, an iron-zinc solid solution phase is preferably formed on the surface portion of the preform. Here, on the surface of the steel sheet, an oxidized layer which is mainly composed of zinc oxide is formed. So, heating condition is desirably set such that interdiffusion between iron and zinc develops to the certain extent. Example of the condition may be heating at a temperature within the range of 800-1100 degree C for about 3-10 minutes using electric furnace or gas furnace. For the purpose of forming the iron-zinc solid solution phase is to inhibit embrittlement of molten zinc in the below-described third step. In case where forming is not carried out in the third step or in case where slight forming is carried out, it is not necessary to form the iron-zinc solid solution phase completely; compared with the above condition, heating can be performed at a lower temperature for shorter duration.

### 2-3. Third step

The third step is a process for obtaining a formed article by feeding a heated preform into the second die to carry out finish forming, and then by quenching it in the second die from A₁ transformation point or more. The detailed description is as follows. A preform heated at A₁ transformation point or more is fed into a second die and then finish forming is carried out therein. At the same time, the preform is cooled from the temperature range and quenched while being constrained in the second die to be a formed article. The second die is desirably a press forming die; finish forming is desirably press forming. Cooling of preform is carried out by using cooled die or cooling water supplied to the preform constrained in the die.

Cooling of die is carried out by supplying cooling water to a die inside of which has water cooling pipes/tubes or a die having a structure such that water grooves are disposed on the surface thereof. The mode of the present invention is an example by feeding the preform into the second die to carry out finish forming and quenching, simultaneously. Alternatively, only quenching could be carried out without finish forming by using die. In the mode of the invention, quenching using die is shown; other ways of quenching may be available. For example, it may be a method including the steps of: die-exterior heating such as high-frequency heating; and spraying coolant to the preform.

### Examples

Hereinafter, the invention will be more specifically described by way of the following examples.

### < Example 1 >

In Example 1, as shown in Table 1, two types of steel having different components (remnant: Fe and inevitable impurity) are used as the base material. Onto the base material, various coating layers having different amount of coating and different Fe content in the coating are formed, and the obtained galvannealed steel sheet having a thickness of 0.7 mm was used as the material. From the galvannealed steel sheet, a blank having a diameter of 90 mm was cut out; then, the blank was fed into a preforming die (a first die) having a punch diameter of 50 mm and heated. After that, preforming by pressing was carried out into a cup-shaped at various temperatures. Namely, the die incorporates a heater therein and the die was heated up to a predetermined temperature by the heater. Thereafter, the blank at room temperature was fed into the die and constrained for 20 seconds; then, the constrained blank was heated up to the temperature; and finally, preforming was carried out (the method is shown as "die" in Table 2.). In addition, a test was carried out in a manner that a blank was fed into a heating furnace and heated, then the heated blank was fed into a preforming die at room temperature to carry out preforming by press. Powdering condition of the cup-shaped preform obtained by the preforming was visually observed and evaluated based on the following criteria.
1. No powdering occurs;
2. Slight powdering occurs;
3. Powdering occurs clearly;
4. Excessive powdering occurs on the entire surface.

The cup-shaped preform obtained by the above forming method was degreased and then heated at 800 or 900 degree C, i.e. A₁ transformation point or more, for 4 minutes in a heating furnace of oxidative atmosphere having an oxygen concentration of 5 vol. % or less. Thereafter, using a second die having a shape such that deformation of perform does not substantially occur at quenching of the preform and having a structure inside of which water cooling pipes/tubes are disposed, quenching was carried out by constraining the cup-shaped preform for 30 seconds while giving load. In addition, after degreasing, heating and quenching was carried out in the same manner as above using the cup-shaped preform on which rust preventive oil was applied. As the rust preventive oil, "NOX-RUST 550HN" manufactured by Parker Industries, Inc. was used. Scale generation after quenching was visually observed and evaluated based on the following criteria.
1. No scale generates;
2. Slight scale generates;
3. Scale generates clearly;
4. Excessive scale generates on the entire surface.
The powdering condition and scale generation of formed article after quenching are shown in Table 2. In terms of scale condition of the formed article, criteria 1 and 2 show favorable surface quality so that these are acceptable. Moreover, hardness of cup shoulder of the formed article after quenching was measured.

### (Table 1)

**(Table 1)**

| | C | Si | Mn | P | S | Al | N | Cr | Ti | Mo | B |
|---|---|---|---|---|---|---|---|---|---|---|---|
| Steel A | 0.21 | 0.04 | 1.5 | 0.032 | 0.006 | 0.028 | 0.0022 | 0.30 | 0.001 | 0.12 | - |
| Steel B | 0.21 | 0.25 | 1.3 | 0.011 | 0.004 | 0.035 | 0.0035 | 0.19 | 0.022 | - | 0.002 |

### (Table 2)

**(Table 2)**

| No. | Type of Steel | Amount of Coating (g/m²) | Fe % | Heating of Blank | Temp. just before Preforming (°C) | Powdering | Application Of Rust Preventive Oil | Temp. Before Quenching (°C) | Scale Generation | Notes |
|---|---|---|---|---|---|---|---|---|---|---|
| 1 | Steel A | 45 | 10 | None | 25 | 3 | None | 900 | 3 | Comparative example |
| 2 | Steel A | 45 | 10 | Die | 41 | 2 | None | 900 | 2 | Comparative Example |
| 3 | Steel A | 45 | 10 | Die | 58 | 2 | None | 900 | 2 | Comparative Example |
| 4 | Steel A | 45 | 10 | Die | 88 | 2 | None | 900 | 2 | Comparative Example |
| 5 | Steel A | 45 | 10 | Die | 100 | 2 | None | 900 | 2 | Example |
| 6 | Steel A | 45 | 10 | Die | 200 | 1 | None | 900 | 1 | Example |
| 7 | Steel A | 45 | 10 | Die | 300 | 1 | None | 900 | 1 | Example |
| 8 | Steel A | 45 | 10 | Die | 400 | 1 | None | 900 | 1 | Example |
| 9 | Steel A | 45 | 13 | None | 25 | 4 | None | 900 | 4 | Comparative example |
| 10 | Steel A | 45 | 13 | Die | 88 | 2 | None | 900 | 2 | Comparative Example |
| 11 | Steel A | 45 | 13 | Die | 100 | 2 | None | 900 | 2 | Example |
| 12 | Steel A | 45 | 13 | Die | 200 | 1 | None | 900 | 1 | Example |
| 13 | Steel A | 45 | 13 | Die | 300 | 1 | None | 900 | 1 | Example |
| 14 | Steel A | 45 | 13 | Die | 400 | 1 | None | 900 | 1 | Example |
| 15 | Steel A | 45 | 14 | None | 25 | 4 | None | 900 | 4 | Comparative example |
| 16 | Steel A | 45 | 14 | Die | 100 | 2 | None | 900 | 2 | Example |
| 17 | Steel A | 45 | 14 | Die | 107 | 2 | None | 900 | 1 | Example |
| 18 | Steel A | 45 | 14 | Die | 121 | 1 | None | 900 | 1 | Example |
| 19 | Steel A | 45 | 14 | Die | 150 | 1 | None | 900 | 1 | Example |
| 20 | Steel A | 45 | 14 | Die | 200 | 1 | None | 900 | 1 | Example |
| 21 | Steel A | 45 | 14 | Die | 300 | 1 | None | 900 | 1 | Example |
| 22 | Steel A | 45 | 14 | Die | 400 | 1 | None | 900 | 1 | Example |
| 23 | Steel A | 45 | 14 | Heating furnace | 100 | 2 | None | 900 | 2 | Example |
| 24 | Steel A | 45 | 14 | Heating furnace | 200 | 1 | None | 900 | 2 | Example |
| 25 | Steel A | 45 | 14 | Heating furnace | 300 | 1 | None | 900 | 1 | Example |
| 26 | Steel A | 45 | 14 | Heating furnace | 400 | 1 | None | 900 | 1 | Example |
| 27 | Steel A | 45 | 14 | Heating furnace | 500 | 1 | None | 900 | 1 | Example |
| 28 | Steel A | 45 | 14 | Heating furnace | 700 | 1 | None | 900 | 1 | Example |
| 29 | Steel A | 45 | 14 | Die | 41 | 3 | Applied | 900 | 2 | Comparative Example |
| 30 | Steel A | 45 | 14 | Die | 58 | 3 | Applied | 900 | 2 | Comparative Example |
| 31 | Steel A | 45 | 14 | Die | 88 | 2 | Applied | 900 | 2 | Comparative Example |
| 32 | Steel A | 45 | 14 | Die | 100 | 2 | Applied | 900 | 1 | Example |
| 33 | Steel A | 45 | 14 | Die | 107 | 2 | Applied | 900 | 1 | Example |
| 34 | Steel A | 45 | 14 | Die | 121 | 1 | Applied | 900 | 1 | Example |
| 35 | Steel A | 45 | 14 | Die | 150 | 1 | Applied | 900 | 1 | Example |
| 36 | Steel A | 45 | 14 | Die | 200 | 1 | Applied | 900 | 1 | Example |
| 37 | Steel A | 45 | 14 | Die | 300 | 1 | Applied | 900 | 1 | Example |
| 38 | Steel A | 45 | 14 | Die | 400 | 1 | Applied | 900 | 1 | Example |
| 39 | Steel A | 45 | 14 | None | 25 | 4 | None | 800 | 3 | Comparative example |
| 40 | Steel A | 45 | 14 | Die | 100 | 2 | Applied | 800 | 1 | Example |
| 41 | Steel A | 45 | 14 | Die | 200 | 1 | Applied | 800 | 1 | Example |
| 42 | Steel A | 45 | 14 | Die | 300 | 1 | Applied | 800 | 1 | Example |
| 43 | Steel A | 45 | 14 | Die | 400 | 1 | Applied | 800 | 1 | Example |
| 44 | Steel B | 45 | 14 | None | 25 | 4 | None | 900 | 4 | Comparative example |
| 45 | Steel B | 45 | 14 | Die | 100 | 2 | Applied | 900 | 1 | Example |
| 46 | Steel B | 45 | 14 | Die | 200 | 1 | Applied | 900 | 1 | Example |
| 47 | Steel B | 45 | 14 | Die | 300 | 1 | Applied | 900 | 1 | Example |
| 48 | Steel B | 45 | 14 | Die | 400 | 1 | Applied | 900 | 1 | Example |
| 49 | Steel B | 45 | 14 | Heating furnace | 500 | 1 | None | 900 | 1 | Example |
| 50 | Steel B | 45 | 14 | Heating furnace | 700 | 1 | Applied | 900 | 1 | Example |
| 51 | Steel B | 45 | 14 | None | 25 | 4 | None | 800 | 3 | Comparative example |
| 52 | Steel B | 45 | 14 | Die | 100 | 2 | Applied | 800 | 1 | Example |
| 53 | Steel B | 45 | 14 | Die | 200 | 1 | Applied | 800 | 1 | Example |
| 54 | Steel B | 45 | 14 | Die | 300 | 1 | Applied | 800 | 1 | Example |
| 55 | Steel B | 45 | 14 | Die | 400 | 1 | Applied | 800 | 1 | Example |
| 56 | Steel B | 45 | 15 | Die | 400 | 1 | Applied | 800 | 1 | Example |
| 57 | Steel B | 60 | 8 | Die | 400 | 1 | Applied | 800 | 1 | Example |

### (Hardenability)

About any of the test pieces of No. 1 to 57, hardness of the formed articles after quenching was 300 HV or more; by quenching from a temperature of A₁ transformation point or more, highly-strengthened formed article was obtained. Particularly, in case where the heating-up temperature was 900 degree C, formed articles having a hardness as high as 420 to 480 HV were obtained. Moreover, compared with steel A, in case of steel B having little content of Mn and Cr and having free of Mo, a formed article having a hardness as high as that of steel A was obtained by adding a small dosage of B (boron) thereto.

### (Effect of preforming temperature and method)

When preforming was carried out under the condition where temperature just before preforming was within 100-700 degree C, compared with comparative examples in which preforming was carried out from room temperature and up to 100 degree C, a favorable surface quality was obtained with little scale generation. The higher the preforming temperature increased, the better the surface quality became. Since temperature of a coating layer in the preforming increased, deformability of the coating layer was improved compared with that of forming at room temperature; whereby, debonding and damage of the coating layer in the preforming were inhibited. Consequently, it is assumed that the steel sheet was protected with a coating layer when heated at A₁ transformation point or more so that oxidation of the steel sheet was inhibited and favorable surface quality was obtained.

### (Effect of Fe content)

With respect to effect of Fe content in the coating layer on the surface quality of the galvannealed steel sheet (GA steel sheet), it was observed that higher Fe content tended to bring poorer surface quality. The cause is assumed that if the Fe content in the coating layer is higher, the more destruction and peeling of the coating layer are promoted in the preforming process.

### (Effect of application of rust preventive oil)

By applying a rust preventive oil over the preform and then heating, scale generation was largely inhibited about the quenched formed article.

### (Formation of iron-zinc solid solution phase)

About all the formed articles of Nos. 1 to 57, formation of iron-zinc solid solution phase was observed.

### < Example 2 >

In the same manner as Example 1, a blank having a diameter of 90 mm was cut out from the base material; the blank was fed into a preforming die (a first die) and then heated; thereafter, the heated blank was preformed at various temperatures to obtain a cup-shaped preform of Example 2. In addition, a test was carried out in a manner that a blank was heated in a heating furnace, and then the heated blank was fed into a preforming die at room temperature for carrying out preforming to obtain a cup-shaped preform. Later, the cup-shaped preform was degreased and then heated at 800 or 900 degree C, i.e. A₁ transformation point or more, for 4 minutes in a heating furnace of oxidative atmosphere having an oxygen concentration of 5 vol. % or less. Then, finish forming was carried out using a second die having a structure where the forming depth is 3 mm larger than that of preforming die and inside of which water cooling pipes/tubes were disposed; at the same time, quenching thereof was carried out by constraining the cup-shaped preform for 30 seconds while giving load at the bottom dead point of the forming. Moreover, in the same manner as Example 1, a cup-shaped preform on which the rust preventive oil was applied after degreasing was heated and quenched.

Condition of cup-shaped preform obtained by preforming and condition of scale generation regarding the formed article after quenching were evaluated in the same manner as Example 1. Table 3 shows condition of scale generation regarding the formed article after quenching. In the scale generation of the formed article, evaluation criteria 1 and 2 are acceptable in view of surface quality. In addition, hardness of a cup-shoulder of the formed article after quenching was also measured.

### (Table 3)

**(Table 3)**

| No | Type of Steel | Amount of Coating (g/m²) | Fe % | Heating of Blank | Temp. just before Preforming (°C) | Powdering | Application of Rust preventive oil | Temp. before Quenching (°C) | Scale Generation | Notes |
|---|---|---|---|---|---|---|---|---|---|---|
| 101 | Steel A | 45 | 10 | None | 25 | 3 | None | 900 | 3 | Comparative example |
| 102 | Steel A | 45 | 10 | Die | 100 | 2 | None | 900 | 2 | Example |
| 103 | Steel A | 45 | 10 | Die | 200 | 1 | None | 900 | 1 | Example |
| 104 | Steel A | 45 | 10 | Die | 300 | 1 | None | 900 | 1 | Example |
| 105 | Steel A | 45 | 10 | Die | 400 | 1 | None | 900 | 1 | Example |
| 106 | Steel A | 45 | 14 | None | 25 | 4 | None | 900 | 4 | Comparative example |
| 107 | Steel A | 45 | 14 | Die | 107 | 2 | None | 900 | 1 | Example |
| 108 | Steel A | 45 | 14 | Die | 121 | 1 | None | 900 | 1 | Example |
| 109 | Steel A | 45 | 14 | Die | 150 | 1 | None | 900 | 1 | Example |
| 110 | Steel A | 45 | 14 | Die | 400 | 1 | None | 900 | 1 | Example |
| 111 | Steel A | 45 | 14 | Heating furnace | 100 | 2 | None | 900 | 2 | Example |
| 112 | Steel A | 45 | 14 | Heating furnace | 400 | 1 | None | 900 | 1 | Example |
| 113 | Steel A | 45 | 14 | Die | 41 | 3 | Applied | 900 | 2 | Compar. ex. |
| 114 | Steel A | 45 | 14 | Die | 58 | 3 | Applied | 900 | 2 | Compar. ex. |
| 115 | Steel A | 45 | 14 | Die | 107 | 2 | Applied | 900 | 1 | Example |
| 116 | Steel A | 45 | 14 | Die | 400 | 1 | Applied | 900 | 1 | Example |
| 117 | Steel A | 45 | 14 | None | 25 | 4 | None | 800 | 3 | Comparative example |
| 118 | Steel A | 45 | 14 | Die | 100 | 2 | Applied | 800 | 1 | Example |
| 119 | Steel A | 45 | 14 | Die | 200 | 1 | Applied | 800 | 1 | Example |
| 120 | Steel B | 45 | 14 | None | 25 | 4 | None | 900 | 4 | Comparative example |
| 121 | Steel B | 45 | 14 | Die | 100 | 2 | Applied | 900 | 1 | Example |
| 122 | Steel B | 45 | 14 | Die | 400 | 1 | Applied | 900 | 1 | Example |
| 123 | Steel B | 45 | 14 | None | 25 | 4 | None | 800 | 3 | Comparative example |
| 124 | Steel B | 45 | 14 | Die | 100 | 2 | Applied | 800 | 1 | Example |
| 125 | Steel B | 45 | 14 | Die | 200 | 1 | Applied | 800 | 1 | Example |

### (Hardenability)

About any of the test pieces of No. 101 to 125, hardness of the formed article after quenching was 300 HV or more, in the same manner as Example 1, by quenching from a temperature of A₁ transformation point or more, highly-strengthened formed article was obtained. Particularly, in case where the heating-up temperature was 900 degree C, formed articles having a hardness as high as 420 to 480 HV were obtained. Moreover, compared with steel A, in case of steel B having little content of Mn and Cr and having free of Mo, a formed article having a hardness as high as that of steel A was obtained by adding a small dosage of B (boron) thereto.

### (Effect of preforming temperature)

In the same manner as Example 1, when preforming was carried out under the condition where temperature just before preforming was within 100-700 degree C, compared with comparative examples in which preforming was carried but at room temperature and up to 100 degreee C, a favorable surface quality was obtained with little scale generation. The higher the preforming temperature increased, the better the surface quality became. Since temperature of a coating layer in the preforming increased, deformability of the coating layer was improved compared with that of forming at room temperature; whereby, debonding and damage of the coating layer in the preforming were inhibited.

### (Effect of Fe content)

In the same manner as Example 1, with respect to effect of Fe content in the coating layer on the surface quality of the GA steel sheet, higher Fe content tended to bring poorer surface quality. The cause is assumed that if the Fe content in the coating layer is higher, the more destruction and peeling of the coating layer are promoted in the preforming process.

### (Effect of application of rust preventive oil)

By applying a rust preventive oil over the preform and then heating, scale generation was largely inhibited about the quenched formed article.

### (Formation of iron-zinc solid solution phase)

About all the formed articles of Nos. 101 to 125, formation of iron-zinc solid solution phase was observed.

The above has described the present invention associated with the most practical and preferred embodiments thereof. However, the invention is not limited to the embodiments disclosed in the specification. Thus, the invention can be appropriately varied as long as the variation is not contrary to claims and the whole contents of the specification.

## Claims

1. A method for manufacturing a formed article comprising:
a first step comprising: feeding into a first die for press a galvannealed steel sheet, as a material, which has a coating layer containing: 8-25 mass % of Fe, and a remnant containing Zn, Al, and impurity; and then preforming the galvannealed steel sheet by pressing to obtain a preform;
a second step of heating the preform at a temperature of 800-1100 degree C; and
a third step of quenching the heated preform from said temperature to obtain a formed article, the material temperature just before preforming of the first step being a temperature below starting point of austenite transformation of the material and within the range of 100-700 degree C.

2. The method for manufacturing a formed article according to claim 1, wherein in the third step, the heated preform is fed into a second die to carry out quenching.

3. The method for manufacturing a formed article according to claim 1, wherein in the third step, the heated preform is fed into a second die to carry out finish forming for forming a shape different from that of the preform and then quenching.

4. The method for manufacturing a formed article according to any one of claims 1 to 3, wherein in the second step, the surface of the preform is applied with a rust preventive oil and then heated.

5. The method for manufacturing a formed article according to any one of claims 1 to 4, wherein in the first step, the material is heated using the first die or a heating means other than the first die such that the material temperature just before the preforming is a temperature below starting point of austenite transformation of the material and within the range of 100-700 degree C.

6. The method for manufacturing a formed article according to any one of claims 1 to 5, wherein an iron-zinc solid solution phase is formed on the surface portion of the formed article after the third step.

7. The method for manufacturing a formed article according to any one of claims 1 to 6, wherein the base component of the material contains: 0.08-0.45 mass % of C and a total of 0.5-3.0 mass % of Mn and/or Cr, and the base component further contains: 0.5 mass % or less of Si, 0.05 mass % or less of P, 0.05 mass % or less of S, 1 mass % or less of Al, 0.01 mass % or less of N, optionally one or more selected from: 0.01 mass % or less of B, 2 mass % or less of Ni, 1 mass % or less of Cu, 1 mass % or less of Mo, 1 mass % or less of V, 1 mass % or less of Ti, and 1 mass % or less of Nb and a remnant of the material contains Fe and impurity.

8. The method for manufacturing a formed article according to claim 7, wherein the base component of the material contains, instead of a part of Fe, one or more selected from: 0.01 mass % or less of B, 2 mass % or less of Ni, 1 mass % or less of Cu, 1 mass % or less of Mo, 1 mass % or less of V, 1 mass % or less of Ti, and 1 mass % or less of Nb.

9. The method for manufacturing a formed article according to claim 8, wherein base component of the material contains 0.0001 mass % or more of B.

10. The method for manufacturing a formed article according to claim 2, wherein the shape of the second die is the same as that of the first die.

11. The method for manufacturing a formed article according to claim 1, wherein the material temperature just before the preforming is 500 degree C or less.

12. The method for manufacturing a formed article according to claim 1, wherein the material temperature just before the preforming is 150 degree C or more.

13. The method for manufacturing a formed article according to claim 1, wherein in the second step, the preform is heated in an atmosphere containing oxygen at a concentration of 10 vol.% or less.

## Patentansprüche

1. Verfahren zum Herstellen eines geformten Gegenstands, das umfasst:
einen ersten Schritt, der umfasst: in eine erste Matrize zum Pressen ein nach dem Verzinken wärmebehandeltes Stahlblech als Material zuzuführen, das eine Deckschicht hat, die enthält: 8 - 25 Masse-% Fe und einen Rest, der Zn, Al und Verunreinigungen enthält; und dann das nach dem Verzinken wärmebehandelte Stahlblech durch Pressen vorzuformen, um eine Vorform zu erhalten;
einen zweiten Schritt, bei dem die Vorform auf eine Temperatur von 800 - 1100 Grad C erwärmt wird; und
einen dritten Schritt, bei dem die erwärmte Vorform ausgehend von der besagten Temperatur abgeschreckt wird, um einen geformten Gegenstand zu erhalten, wobei es sich bei der Materialtemperatur unmittelbar vor dem Vorformen des ersten Schritts um eine Temperatur unter dem Beginnpunkt einer Austenitumwandlung des Materials handelt, und die innerhalb des Bereichs von 100 - 700 Grad C liegt.

2. Verfahren zum Herstellen eines geformten Gegenstands nach Anspruch 1, wobei im dritten Schritt die erwärmte Vorform in eine zweite Matrize zugeführt wird, um das Abschrecken durchzuführen.

3. Verfahren zum Herstellen eines geformten Gegenstands nach Anspruch 1, wobei im dritten Schritt die erwärmte Vorform in eine zweite Matrize zugeführt wird, um eine Fertigumformung zum Bilden einer Form durchzuführen, die sich von derjenigen der Vorform unterscheidet, und dann abgeschreckt wird.

4. Verfahren zum Herstellen eines geformten Gegenstands nach einem der Ansprüche 1 bis 3, wobei im zweiten Schritt die Oberfläche der Vorform mit einem Rostschutzöl versehen wird, und dann erwärmt wird.

5. Verfahren zum Herstellen eines geformten Gegenstands nach einem der Ansprüche 1 bis 4, wobei im ersten Schritt das Material unter Verwendung der ersten Matrize oder einer anderen Erwärmungsvorrichtung als der ersten Matrize so erwärmt wird, dass es sich bei der Materialtemperatur unmittelbar vor dem Vorformen um eine Temperatur unter dem Beginnpunkt einer Austenitumwandlung des Materials handelt, und die innerhalb des Bereichs von 100 - 700 Grad C liegt.

6. Verfahren zum Herstellen eines geformten Gegenstands nach einem der Ansprüche 1 bis 5, wobei eine Eisen-Zink-Feststofflösungsphase auf dem Oberflächenabschnitt des geformten Gegenstands nach dem dritten Schritt ausgebildet wird.

7. Verfahren zum Herstellen eines geformten Gegenstands nach einem der Ansprüche 1 bis 6, wobei die Grundkomponente des Materials enthält: 0,08 - 0,45 Masse-% an C und insgesamt 0,5 - 3,0 Masse-% an Mn und/oder Cr, und die Grundkomponente darüber hinaus enthält: 0,5 Masse-% oder weniger an Si, 0,05 Masse-% oder weniger an P, 0,05 Masse-% oder weniger an S, 1 Masse-% oder weniger an Al, 0,01 Masse-% oder weniger an N, optional ein oder mehrere Element/e, das bzw. die ausgewählt ist bzw. sind aus: 0,01 Masse-% oder weniger an B, 2 Masse-% oder weniger an Ni, 1 Masse-% oder weniger an Cu, 1 Masse-% oder weniger an Mo, 1 Masse-% oder weniger an V, 1 Masse-% oder weniger an Ti und 1 Masse-% oder weniger an Nb, und wobei ein Rest des Materials Fe und Verunreinigungen enthält.

8. Verfahren zum Herstellen eines geformten Gegenstands nach Anspruch 7, wobei die Grundkomponente des Materials anstelle eines Teils an Fe ein oder mehrere Element/e enthält, das bzw. die ausgewählt ist bzw. sind aus: 0,01 Masse-% oder weniger an B, 2 Masse-% oder weniger an Ni, 1 Masse-% oder weniger an Cu, 1 Masse-% oder weniger an Mo, 1 Masse-% oder weniger an V, 1 Masse-% oder weniger an Ti und 1 Masse-% oder weniger an Nb.

9. Verfahren zum Herstellen eines geformten Gegenstands nach Anspruch 8, wobei die Grundkomponente des Materials 0,0001 Masse-% oder mehr an B enthält.

10. Verfahren zum Herstellen eines geformten Gegenstands nach Anspruch 2, wobei es sich bei der Form der zweiten Matrize um dieselbe wie diejenige der ersten Matrize handelt.

11. Verfahren zum Herstellen eines geformten Gegenstands nach Anspruch 1, wobei die Materialtemperatur unmittelbar vor dem Vorformen 500 Grad C oder weniger beträgt.

12. Verfahren zum Herstellen eines geformten Gegenstands nach Anspruch 1, wobei die Materialtemperatur unmittelbar vor dem Vorformen 150 Grad C oder mehr beträgt.

13. Verfahren zum Herstellen eines geformten Gegenstands nach Anspruch 1, wobei im zweiten Schritt die Vorform in einer Atmosphäre erwärmt wird, die Sauerstoff in einer Konzentration von 10 Vol.-% oder weniger enthält.

## Revendications

1. Procédé de fabrication d'un article façonné comprenant :
une première étape comprenant : l'introduction dans un premier moule pour presse d'une tôle d'acier recuite après galvanisation, comme une matière, qui présente une couche de revêtement contenant : 8-25 % en masse de Fe, et un reliquat contenant Zn, Al, et une impureté ; et puis le préfaçonnage de la tôle d'acier recuite après galvanisation par compression pour obtenir une ébauche ;
une seconde étape de chauffage de l'ébauche à une température de 800-1 100 degrés C ; et
une troisième étage de trempe de l'ébauche chauffée à partir de ladite température pour obtenir un article façonné, la température de matière juste avant le préfaçonnage de la première étape étant une température inférieure au point de démarrage de la transformation d'austénite de la matière et dans l'intervalle de 100-700 degrés C.

2. Procédé de fabrication d'un article façonné selon la revendication 1, dans lequel dans la troisième étape, l'ébauche chauffée est introduite dans un second moule pour réaliser une trempe.

3. Procédé de fabrication d'un article façonné selon la revendication 1, dans lequel dans la troisième étape, l'ébauche chauffée est introduite dans un second moule pour réaliser un façonnage de finition pour façonner une forme différente de celle de l'ébauche et puis une trempe.

4. Procédé de fabrication d'un article façonné selon l'une quelconque des revendications 1 à 3, dans lequel dans la seconde étape, la surface de l'ébauche est soumise à l'application d'une huile de prévention contre la rouille et ensuite chauffée.

5. Procédé de fabrication d'un article façonné selon l'une quelconque des revendications 1 à 4, dans lequel dans la première étape, la matière est chauffée en utilisant le premier moule ou un moyen de chauffage différent du premier moule de sorte que la température de matière juste avant le préfaçonnage est une température inférieure au point de démarrage de la transformation d'austénite de la matière et dans l'intervalle de 100-700 degrés C.

6. Procédé de fabrication d'un article façonné selon l'une quelconque des revendications 1 à 5, dans lequel une phase de solution solide de fer-zinc est formée sur la portion de surface de l'article façonné après la troisième étape.

7. Procédé de fabrication d'un article façonné selon l'une quelconque des revendications 1 à 6, dans lequel le constituant de base de la matière contient : 0,08-0,45 % en masse de C et un total de 0,5-3,0 % en masse de Mn et/ou Cr, et le constituant de base contient de plus : 0,5 % en masse ou moins de Si, 0,05 % en masse ou moins de P, 0,05 % en masse ou moins de S, 1 % en masse ou moins d'Al, 0,01 % en masse ou moins de N, éventuellement un ou plusieurs choisis parmi : 0,01 % en masse ou moins de B, 2 % en masse ou moins de Ni, 1 % en masse ou moins de Cu, 1 % en masse ou moins de Mo, 1 % en masse ou moins de V, 1 % en masse ou moins de Ti, et 1 % en masse ou moins de Nb et un reliquat de la matière contient Fe et une impureté.

8. Procédé de fabrication d'un article façonné selon la revendication 7, dans lequel le constituant de base de la matière contient, à la place d'une partie de Fe, un ou plusieurs choisis parmi : 0,01 % en masse ou moins de B, 2 % en masse ou moins de Ni, 1 % en masse ou moins de Cu, 1 % en masse ou moins de Mo, 1 % en masse ou moins de V, 1 % en masse ou moins de Ti, et 1 % en masse ou moins de Nb.

9. Procédé de fabrication d'un article façonné selon la revendication 8, dans lequel le constituant de base de la matière contient 0,0001 % en masse ou plus de B.

10. Procédé de fabrication d'un article façonné selon la revendication 2, dans lequel la forme du second moule est identique à celle du premier moule.

11. Procédé de fabrication d'un article façonné selon la revendication 1, dans lequel la température de matière juste avant le préfaçonnage est de 500 degrés C ou inférieure.

12. Procédé de fabrication d'un article façonné selon la revendication 1, dans lequel la température de matière juste avant le préfaçonnage est de 150 degrés C ou supérieure.

13. Procédé de fabrication d'un article façonné selon la revendication 1, dans lequel dans la seconde étape, l'ébauche est chauffée dans une atmosphère contenant de l'oxygène à une concentration de 10 % en volume ou inférieure.
